# EUROPEAN PATENT SPECIFICATION

(11) **EP 2 217 453 B1**
(45) Date of publication and mention of the grant of the patent: **22.02.2012**
(21) Application number: 08846662.8
(22) Date of filing: 27.10.2008
(51) Int. Cl.: B60C 9/18

(54) **TYRE WITH A CROWN COMPRISING A BIELASTIC REINFORCING ELEMENT**
REIFEN MIT EINER ABDECKUNG AUS EINEM BIELASTISCHEN VERSTÄRKUNGSELEMENT
PNEU AVEC UN SOMMET COMPRENANT UN ÉLÉMENT DE RENFORT BIÉLASTIQUE

(30) Priority: 05.11.2007 FR 0758778; 08.01.2008 US 10398 P
(43) Date of publication of application: 18.08.2010
(73) Proprietor: Société de Technologie MICHELIN, 63000 Clermont-Ferrand (FR); MICHELIN Recherche et Technique S.A., 1763 Granges-Paccot (CH)
(72) Inventor: HUYGHE, Jean-Michel, F-63100 Clermont-Ferrand (FR)
(74) Representative: Randl, Oliver Georg
(86) International application number: PCT/EP2008/009073
(87) International publication number: WO 2009/059710

(56) References cited:
- FR-A- 2 892 664

## Description

### Field of the invention

The invention relates to a tyre comprising at least one circumferential reinforcing element comprising a bielastic fabric, like the one disclosed e.g. by FR-A-2 892 664.

### Technology background

Vehicle tyres are incessantly subjected to many mechanical stresses of various origins, depending in particular on the type of vehicle, the driving style of the driver, the type of itinerary followed, the general state of the road network on which the vehicle is travelling, etc. Each of these parameters has a direct or indirect impact on the type and the intensity of the mechanical stresses and strains that the tyre has to undergo during its use. The crown of the tyre - i.e. that part of the tyre towards which the sidewalls converge and which comprises the tread and a crown reinforcement - is a region greatly affected by these phenomena and the structure of which has a crucial influence on the endurance of the tyre.

One region that is particularly critical for the endurance of the tyre is the shoulder of the crown, i.e. the region where the axial ends of the crown reinforcement lie. When these ends are highly stressed, there may be local separation between the reinforcing elements of the crown reinforcement and the rubber that surrounds them, thereby possibly giving rise to crack initiation. The propagation of such cracks may in the end contribute to reducing the longevity of the tyre.

### Summary of the invention

The present invention seeks to improve the endurance of a tyre and in particular of its crown.

This objective is achieved by means of a tyre comprising a carcass reinforcement radially surmounted by a crown reinforcement comprising at least one layer of reinforcements, the tyre furthermore comprising a bielastic reinforcing element extending circumferentially and comprising a bielastic fabric, the bielastic reinforcing element being, at least in part, radially adjacent to a portion of at least one reinforcing layer of the crown reinforcement, in the immediate proximity of an axial end of this reinforcing layer of the crown reinforcement.

The bielastic fabric may in particular be a bielastic knitted (stitched) fabric, the loops forming the stitches of which are capable of moving with respect to one another in the knitting direction and in the direction perpendicular to the knitting direction.

Thanks to such an implementation of the bielastic reinforcing element, the endurance of the tyre and its lifetime are improved. This observation may be explained by the fact that the bielastic reinforcing element provides an energy absorption/diffusion effect, which has the consequence that the stresses undergone by the axial ends of the crown reinforcement are reduced. In addition, the use of a bielastic reinforcing element improves the crack propagation resistance. Such a use is particularly advantageous in the case of passenger vehicle tyres. This is because such tyres are liable to be highly stressed in certain types of use, such as when cornering at high speed and/or in certain types of hostile environment. The crown is then subjected to high stresses. The present invention makes it possible to reduce the harmful effects of such stresses.

According to a first embodiment, the bielastic reinforcing element is placed, at least in part, radially between the crown reinforcement and the carcass reinforcement. This embodiment has the advantage of reducing the level of stresses in the region where the axial end of the crown reinforcement is in contact with the carcass reinforcement (or, more precisely, the region where it would be in contact with the carcass reinforcement if the bielastic reinforcing element were not added). In other words, the bielastic reinforcing element plays the role of an intermediate elastic sheet that reduces the level of stresses arising in this stressed region. It has also been found that the presence of the bielastic reinforcing element has the effect of stopping the propagation of cracks: a crack that reaches the reinforcing element is stopped thereat and no longer propagates beyond the reinforcing element.

Very frequently, the crown reinforcement comprises two or even more reinforcing layers. In each reinforcing layer, the reinforcing elements are substantially mutually parallel and are crossed from one layer to another. This is in particular the conventional construction of a radial-carcass tyre. According to one advantageous embodiment of the invention, the bielastic reinforcing element is placed, at least in part, radially between two of the reinforcing layers of the crown reinforcement. This embodiment makes it possible to reduce the stresses between two reinforcing layers of the crown reinforcement, in a manner analogous to the first embodiment.

Advantageously, the bielastic reinforcing element is extended so as to border an axial end of at least one reinforcing layer of the crown reinforcement. This embodiment has the advantage of reducing the stresses all around one end of a reinforcing layer and of stopping the propagation of cracks in this region. This stopping of crack propagation could not be achieved with "bordering rubbers" surrounding the ends of the crown reinforcement.

According to one advantageous embodiment, the bielastic reinforcing element borders an axial end of at least the radially outermost reinforcing layer of the crown reinforcement and, at least in part, covers the radially outer surface of this reinforcing layer. Thus, the reinforcing element produces its effect on the end of the bordered reinforcing layer and may even replace the "decoupling rubber" that sometimes is provided in this region of the tyre.

According to a variant, the radially outermost reinforcing layer of the crown reinforcement is entirely covered by the bielastic reinforcing element. Thus, the entire interfacial region between the crown reinforcement and the tread of the tyre benefits from the presence of the bielastic reinforcing element.

According to one advantageous embodiment, the bielastic reinforcing element borders the axial end of the entire crown reinforcement. Thus, this element borders all the reinforcing layers forming the crown reinforcement. This embodiment has the advantage of facilitating the manufacture.

According to another embodiment of the invention, the bielastic reinforcing element is in part radially adjacent to at least one axial end of a reinforcing layer of the crown reinforcement and extended, radially inwards and axially outwards, so as to be, in part, radially adjacent to the carcass reinforcement. This embodiment has the advantage of making it very simple to position the reinforcing element, while still making it possible to reduce the stresses both at the end of the reinforcing layer of the crown reinforcement and in the transition region between the crown reinforcement and the carcass reinforcement. It also makes it possible to stop propagation of cracks that reach this region.

If, as is often the case, the crown reinforcement comprises at least two reinforcing layers, the radially outer reinforcing layer having an axial width smaller than the width of the radially inner reinforcing layer, one advantageous embodiment of the invention comprises providing a bielastic reinforcing element in part radially adjacent to an axial end of each of the reinforcing layers of the crown reinforcement and extended, radially inwards and axially outwards, so as to be, in part, radially adjacent to the carcass reinforcement. This embodiment combines great ease of manufacture with a large extent of the region benefiting from the presence of the bielastic element.

### Brief description of the drawings

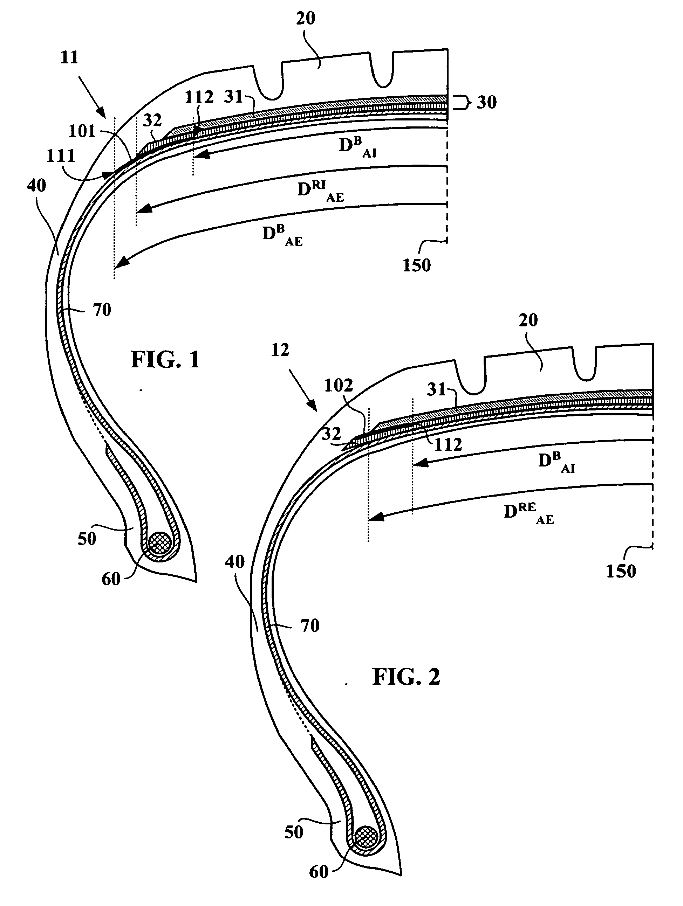

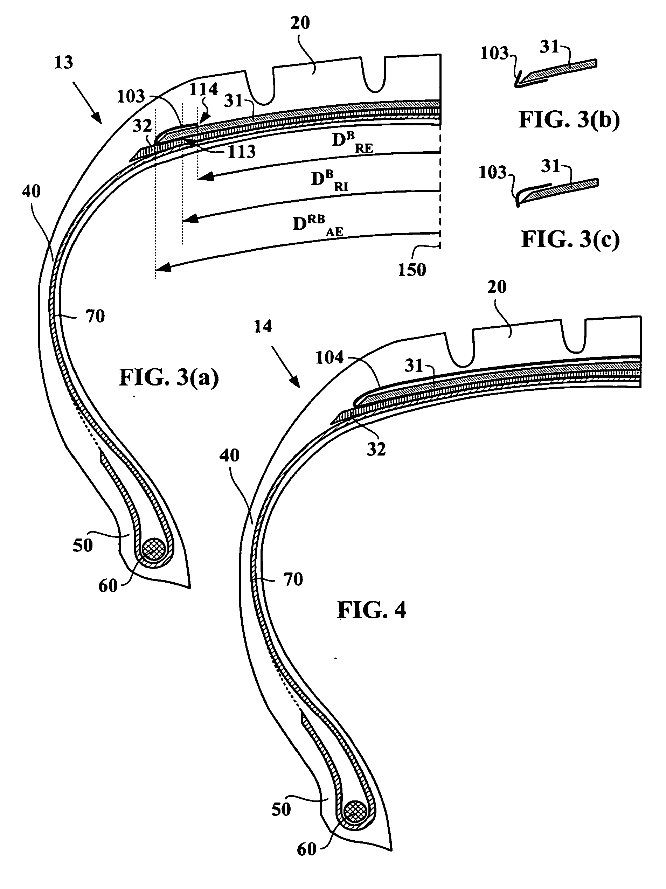

Figures 1 to 8 each show a radial cross section of part of a tyre, with examples of different ways of positioning a bielastic reinforcing element. The term "radial cross section" is understood to mean here a cross section in a plane that includes the rotation axis of the tyre. Figures 3(b) and 3(c) represent a detail of the variant of the tyre shown in Figure 3(a).

### Detailed description of the drawings

Figure 1 shows, in radial cross section, one quarter of a tyre 11 according to an embodiment of the invention. The tyre 11 comprises a crown 20 with a crown reinforcement 30, which is formed from a first reinforcing layer 31 and a second reinforcing layer 32 and is radially surmounted by a tread. Each reinforcing layer comprises reinforcing threads embedded in a matrix formed from a rubber mix. The term "rubber mix" denotes here a rubber composition that comprises at least one elastomer and at least one filler. It should be noted that, in the present document, the term "thread" should be understood in a very general sense and comprises threads in the form of monofilaments, multifilaments, a cable, a yarn or an equivalent assembly, and this applies irrespective of the material constituting the thread of the surface treatment for promoting its bonding to the rubber or for its adhesion. The reinforcing elements of each reinforcing layer are substantially mutually parallel and the reinforcing elements of two layers are crossed from one layer to another at an angle of about 20°, as is well known to those skilled in the art in the case of radial tyres.

The tyre 11 also comprises sidewalls 40 and two beads 50, each of which has an annular reinforcement structure 60. The tyre 11 also comprises a carcass reinforcement 70 that extends from one bead 50 to the other and is anchored in each of the two beads 50 by an upturn. Here this carcass reinforcement 70 comprises reinforcing threads oriented substantially radially, that is to say making an angle greater than or equal to 65° and smaller than or equal to 90° or less with the circumferential direction.

The tyre 11 furthermore comprises a bielastic reinforcing element 101 that extends circumferentially and comprised of (i.e. comprising) a bielastic fabric. The term "bielastic" is understood to mean that the material in question possesses properties that make it elastic in at least two substantially perpendicular directions and preferably in all directions.

The reinforcing element 101 advantageously comprises an elastic knitted fabric (i.e. a stitched fabric, the loops forming the stitches of which are capable of moving with respect to one another in the knitting direction and in the direction perpendicular to the knitting) which has a low apparent density and is highly deformable. This allows elasticity by the threads sliding and by the stitches deforming. To a certain extent, it allows mechanical decoupling between the various structural components between which it is interposed. Moreover, an advantage of an elastic knitted fabric is the fact that its structure is sufficiently flexible to follow the deformations of the tyre. Thus, various types of material may be chosen to form this elastic knitted fabric: its thickness, its void content and its density are directly related to this choice and to the structure of the knitted fabric (diameter of the thread, number of stitches per dm and tightness).

The bielastic fabric has at least one and preferably all of the following features:
- an elastic elongation of at least 8%;
- a stitch density of 150 stitches per decimetre or higher, and preferably 200 stitches per decimetre or higher.

For example, trials carried out with a knitted fabric comprising 240 stitches per decimetre on one side and 235 stitches per decimetre on the other side have shown very good results, especially in terms of crack resistance.

In general, the bielastic knitted fabric according to an embodiment of the invention comprises synthetic fibres, natural fibres or a mixture of these fibres. As regards synthetic fibres, the bielastic knitted fabric according to the invention may comprise at least one type of fibre chosen from polyamide 6 fibre, polyamide 6,6 (nylon) fibre, polyester fibre, etc.

It is advantageous for said fabric to comprise at least one material chosen from polyamides, polyesters, rayon, cotton, wool, aramid, silk and flax.

According to an advantageous alternative embodiment, a certain proportion of elastic threads, such as those made of polyurethane, latex, natural rubber or synthetic rubber, may prove to be useful so as to provide elastic springback, thereby making it easier to use the fabric. An example for knitted fabric according to the invention, is knitted fabric sold by Milliken under the reference 2700, made up of 82% polyamide-6 fibre and 18% polyurethane with a linear density of 44 dtex.

The bielastic fabric or knitted fabric according to an embodiment of the invention has a thickness that may lie between 0.2 mm and 2 mm, and preferably between 0.4 and 1.2 mm. Its mass per unit area is generally between 70 and 700 g/m² and preferably between 140 and 410 g/m².

According to an alternative embodiment, the bielastic knitted fabric is made up of at least one polymer chosen from thermosetting polymers and thermoplastic polymers.

It is not essential to use elastomeric fibres to produce the fabric or knitted fabric, but a small proportion thereof may optionally be provided so as to promote processing and to facilitate elastic springback.

If, however, only mechanical decoupling is desired, the use of an elastomeric matrix may help to increase the decoupling capability.

The term "bielastic fabric" also covers structures that have the possibility of undergoing reversible elastic deformation but are not necessarily obtained by knitting. In particular, these may be structures obtained by crocheting, or looped or needle-punched assemblies.

The interlacing of the loops forms an elastically deformable network in two approximately perpendicular directions. In the advantageous case in which a bielastic knitted fabric is used, the deformability of this bielastic knitted fabric according to the invention results in particular from the knitted structure, the fibres constituting the knitted fabric sliding over one another in the stitched network. In general, the elastic elongation of the bielastic knitted fabric according to the invention is at least 10% in at least one of the two directions of elongation, advantageously 50% or more, and more particularly even 100% or more. These properties apply before the knitted fabric is incorporated into the tyre according to the invention.

The direction in which the bielastic knitted fabric is laid on the regions to be protected is advantageously such that the direction of the knitted fabric having the greatest elongation is parallel to the direction of the highest stress acting on said region.

Preferably, the elastic knitted fabric may have a density of at least 0.02 g/cm³, measured conventionally, this density possibly ranging up to 0.50 g/cm³.

Another feature of the elastic knitted fabric that can be used within the framework of the invention is its void content. In general according to the invention the void content will advantageously be at least 40% so that the knitted fabric is sufficiently compressible. This void content may be calculated by comparing the apparent density of the knitted fabric with the density of the compact material constituting its matrix, measured by any conventional means.

Among the non-elastomeric materials that may make up the matrix of these knitted fabrics, mention may be made of:
- natural textile fibres, such as cotton, wool, flax, hemp and silk fibres;
- artificial textile fibres, such as rayon fibres;
- synthetic textile fibres, for example polyester, polyamide, aramid, polyvinyl chloride and polyolefin fibres; and
- mineral fibres, for example glass, silica or rock wool fibres.

Among elastomeric materials, mention may be made of natural rubber, polybutadiene, SBR and polyurethane.

In the example of Figure 1, one part of the bielastic reinforcing element 101 is in part radially adjacent to a portion of the reinforcing layer 32 of the crown reinforcement 30, in the immediate vicinity of the axial end of this reinforcing layer 32. within the context of this document, a bielastic reinforcing element is said to be "radially adjacent" to a reinforcing layer when it is in contact with this reinforcing layer, so as to extend along the reinforcing layer, and is separated from the reinforcing elements of this reinforcing layer only by the material that embeds these reinforcing elements (therefore in general the rubber mix that embeds these reinforcing elements - irrespective of whether this is a calendering mix or a topping mix).

In the example of Figure 1, the bielastic reinforcing element 101 is placed, in part, radially between the crown reinforcement 30 and the carcass reinforcement 70. It is therefore radially adjacent both to the radially inner reinforcing layer 32 of the crown reinforcement and to the reinforcing layer that forms the carcass reinforcement 70 (or, if the latter comprises several reinforcing layers, to the radially outermost reinforcing layer). It should be pointed out that a point A is said to be "radially interior" to a point B (or "radially to the inside" of point B) if it is closer to the rotation axis of the tyre than point B. Conversely, a point C is said to be "radially external" to a point D (or "radially to the outside" of point D) if it is further away from the rotation axis of the tyre than point D.

Let D^{B}_{AE} be the curvilinear distance separating, in a radial cross section, the axially outer end 111 of the bielastic reinforcing element 101 from the mid-plane 150 of the tyre, measured along the path of the carcass reinforcement 70, and let D^{RI}_{AE} be the curvilinear distance separating, in the same radial cross section, the end of the reinforcing layer 32 of the crown reinforcement to which the bielastic reinforcing element 101 is radially adjacent from the mid-plane 150, D^{RI}_{AE} being measured along (i.e. along the path of) the reinforcing layer 32 of the crown reinforcement. Also let D^{B}_{AI} be the curvilinear distance separating, in a radial cross section, the axially inner end 112 of the bielastic reinforcing element 101 from the mid-plane 150 of the tyre, D^{B}_{AI} being measured along the reinforcing layer 32 of the crown reinforcement to which the bielastic reinforcing element 101 is radially adjacent. It should be pointed out that a point A is said to be "axially interior" to a point B (or "axially to the inside" of point B) if it is closer to the mid-plane 150 of the tyre than point B. Conversely, if a point C is said to be "axially exterior" to a point D (or "axially to the outside" of point D) if it is further away from the mid-plane 150 of the tyre than point D. The "mid-plane" 150 of the tyre is the plane normal to the rotation axis of the tyre and lying equidistantly from the annular reinforcing structures of each bead.

It is advantageous to ensure that the curvilinear distance D^{B}_{AE} is greater than the curvilinear distance D^{RI}_{AE} (D^{B}_{AE} > D^{RI}_{AE}) and preferably greater by more than 5 mm (D^{B}_{AE} - D^{RI}_{AE} > 5 mm), thereby making it possible to guarantee that the end of the bielastic reinforcing element is offset relative to the end of the reinforcing layer, despite the uncertainty in laying it when building the tyre.

Preferably, the curvilinear distance D^{B}_{AI} is chosen such that D^{RI}_{AE} - D^{B}_{AI} ≤ D^{B}_{AE} - D^{RI}_{AE}.

Figure 2 shows, in radial cross section, one quarter of another tyre 12 according to another embodiment of the invention. Unlike the tyre 11 of Figure 1, the bielastic reinforcing element 102 here is placed, in part, radially between the two reinforcing layers 31 and 32 of the crown reinforcement. Of course, this embodiment is in no way limited to tyres having a crown reinforcement with only two reinforcing layers. If for example the tyre 12 had in addition a third reinforcing layer radially superposed on the reinforcing layers 31 and 32 (for example, a hooping (bracing) layer having reinforcing elements aligned in the circumferential direction), it would also be in accordance with the invention to provide the bielastic reinforcing element between the layer 31 and this hooping layer, or else to provide two bielastic reinforcing elements, one between the layers 31 and 32 and the other between the layer 31 and the hooping layer.

According to a preferred embodiment, the curvilinear distance along which the bielastic reinforcing element 102 is "sandwiched" between two reinforcing layers 31 and 32 (in other words, the difference between (a) the curvilinear distance D^{RE}_{AE} separating, in a radial cross section, the end of the radially outer reinforcing layer 31 from the mid-plane 150 and (b) the curvilinear distance D^{B}_{AI} separating, in the same radial cross section, the axially inner end 112 of the bielastic reinforcing element 101 from the mid-plane 150 of the tyre, i.e. (D^{RE}_{AE} - D^{B}_{AI}), the two distances being measured along the radially inner reinforcing layer 32, is greater than 5 mm and more preferably greater than 10 mm. It is also advantageous to extend the bielastic reinforcing element axially inwards by a layer of rubber, the axial width of which is between 5 and 10 mm.

The embodiment shown in Figure 2 makes it possible to increase the endurance to cleavage between the various reinforcing layers. The term "cleavage" is understood here to mean a crack which is initiated at the end of two reinforcing layers and which propagates between the reinforcing layers, so as to create a separation between the reinforcing layers and threaten the integrity of the belt of the tyre.

Figure 3(a) shows, in radial cross section, one quarter of another tyre 13 according to an embodiment of the invention. In this embodiment, the bielastic reinforcing element 103 is extended so as to border an axial end of at least one reinforcing layer of the crown reinforcement. In this embodiment, the bielastic reinforcing element is interposed in addition to or in place of the decoupling rubber, in order to protect the crown block from cleavage.

Within the context of this document, when it is stated that a bielastic reinforcing element "borders" a reinforcing layer, it should be understood that the bielastic reinforcing element envelopes, at least partially, one end of this reinforcing layer, so as to cover at least one edge of the end. In other words, the bielastic reinforcing element is folded back so as to cover at least one edge of the end of the reinforcing layer in question. The bordering may be complete, in which case the reinforcing element envelopes the end of the reinforcing layer in the manner of a "U" (this is the case shown in Figure 3(a)), or it may be partial, in which case the reinforcing element is folded back as an "L" around the reinforcing layer (Figures 3(b) and 3(c)). In both situations, the end of the reinforcing layer is covered by the bielastic reinforcing element. It should be pointed out that if a "U" bordering is chosen, the arms of the "U" are not necessarily symmetrical and may in particular have a different length.

The bielastic reinforcing element 103 borders the axial end of the radially outermost reinforcing layer 31 of the crown reinforcement and at least in part covers the radially outer surface of this reinforcing layer 31. According to a preferred embodiment, the bielastic reinforcing element 103 covers the radially outer surface of the reinforcing layer 31 over a length of at least 5 mm. In other words, the difference between (a) the curvilinear distance D^{RB}_{AE} separating, in a radial cross section, the axial end of the bordered reinforcing layer from the mid-plane 150 and (b) the curvilinear distance D^{B}_{RE} separating, in the same radial cross section, the radially outer end 114 of the bielastic reinforcing element 103 from the mid-plane 150, the two curvilinear distances D^{RB}_{AE} and D^{B}_{RE} being measured along the path of the bordered reinforcing layer, is greater than 5 mm (D^{RB}_{AE} - D^{B}_{RE} > 5 mm). According to an advantageous variant, the bielastic element is dimensioned and placed in such a way that the difference between (a) the curvilinear distance D^{RB}_{AE} and (b) the curvilinear distance D^{B}_{RI} separating, in the same radial cross section, the radially inner end 113 of the bielastic reinforcing element 103 from the mid-plane 150, the distance D^{B}_{RI} being measured along the path of the bordered reinforcing layer, is also greater than 5 mm (D^{RB}_{AE} - D^{B}_{RI} > 5 mm).

Figure 4 shows, in radial cross section, one quarter of another tyre 14 according to another embodiment of the invention, in which the radially outer surface of the radially outermost reinforcing layer 31 of the crown reinforcement is entirely covered by a bielastic reinforcing element 104. Thus, it is possible to stop the propagation of cracks that arise in the recesses of the tread pattern. For example, if a stone initiates a crack at the bottom of a groove in the tread, this crack could propagate as far as the belt of the tyre. The presence of the bielastic reinforcing element would have the effect of stopping such a crack from propagating.

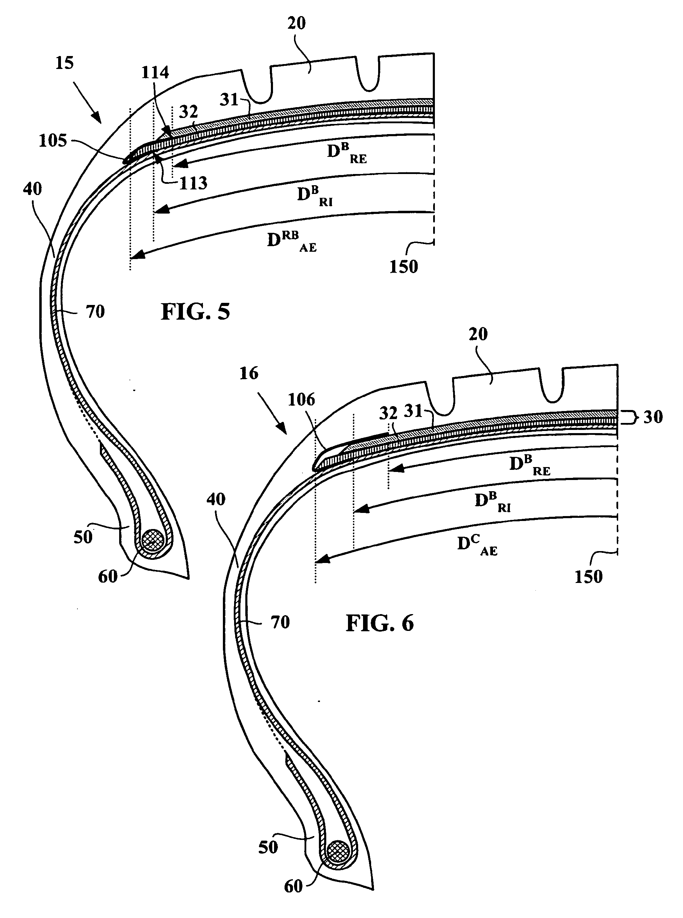

Figure 5 shows, in radial cross section, one quarter of another tyre 15 according to another embodiment of the invention in which a radially inner reinforcing layer 32 is completely bordered by a bielastic reinforcing element 105. The bielastic reinforcing element 105 is folded back so as to form an open "U" loop around the reinforcing layer 32.

According to a preferred embodiment, the bielastic reinforcing element 105 is dimensioned and placed in such a way that the difference between (a) the curvilinear distance D^{RB}_{AE} separating, in a radial cross section, the axial end of the bordered reinforcing layer from the mid-plane 150 and (b) the curvilinear distance D^{B}_{RI} separating, in the same radial cross section, the radially inner end 113 of the bielastic reinforcing element 105 from the mid-plane 150, the two curvilinear distances D^{RB}_{AE} and D^{B}_{RI} being measured along the path of the bordered reinforcing layer, is greater than 5 mm (D^{RB}_{AE} - D^{B}_{RI} > 5 mm). According to an advantageous variant, the difference between (a) the curvilinear distance D^{RB}_{AE} and (b) the distance D^{B}_{RE} separating, in the same radial cross section, the radially outer end 114 of the bielastic reinforcing element 105 from the mid-plane 150, the curvilinear distance D^{B}_{RE} being measured along the path of the bordered reinforcing layer, is greater than 5 mm (D^{RB}_{AE} - D^{B}_{RE} > 5 mm). Thus, any laying imprecision arising when the tyre is built is compensated for.

Figure 6 shows, in radial cross section, one quarter of another tyre 16 according to another embodiment of the invention in which the bielastic reinforcing element 106 borders not only one or several of the reinforcing layers, but all of the reinforcing layers of the crown reinforcement 30. In other words, the bielastic reinforcing element 106 borders the axial end of the crown reinforcement 30 in its entirety. This embodiment has the advantage of making it easier to manufacture the tyre.

If D^{C}_{AE} denotes the curvilinear distance separating, in a radial cross section, the axial end of the belt, that is to say of the axially widest reinforcing layer, from the mid-plane 150, measured along the path of the axially widest reinforcing layer, it is preferable to dimension the elements of the tyre such that the conditions D^{C}_{AE} - D^{B}_{RI} > 5 mm and D^{C}_{AE} - D^{B}_{RE} > 5 mm are fulfilled.

Those skilled in the art will understand that intermediate embodiments are also possible, in which the bielastic reinforcing element borders a plurality of reinforcing layers of the crown reinforcement, without however bordering all of the reinforcing layers.

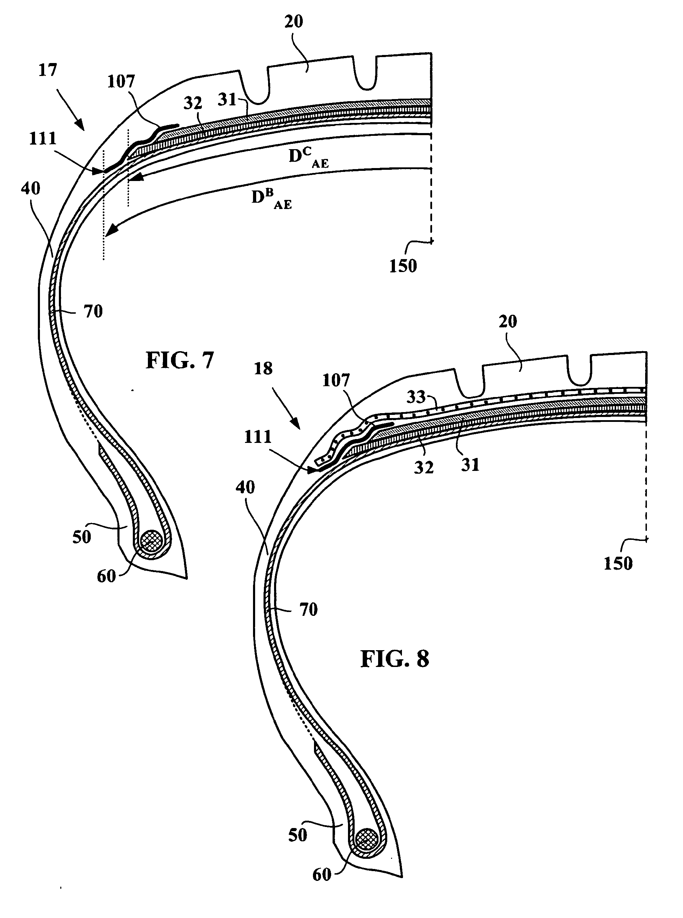

Figure 7 shows, in radial cross section, one quarter of another tyre 17 according to another embodiment of the invention in which the bielastic reinforcing element overlaps all the reinforcing layers of the crown reinforcement and part of the carcass reinforcement. The radially outer reinforcing layer 31 has a smaller axial width than the axial width of the radially inner reinforcing layer 32. The bielastic reinforcing element 107 is in part radially adjacent to an axial end of each of the reinforcing layers 31 and 32 of the crown reinforcement and radially extended inwards and axially outwards in such a way as to be, in part, radially adjacent to the carcass reinforcement. This embodiment means that the entire end region of the crown benefits from the "anti-cracking" properties of the bielastic reinforcing element and may complement a crown hooping layer (see Figure 8).

According to a preferred embodiment, the bielastic reinforcing element 107 is dimensioned and placed in such a way that the difference between (a) the curvilinear distance D^{C}_{AE} separating, in a radial cross section, the axial end of the axially widest reinforcing layer from the mid-plane 150, the distance D^{C}_{AE} being measured along the axially widest reinforcing layer, and (b) the curvilinear distance D^{B}_{AE} separating, in the same radial cross section, the axially outer end 111 of the bielastic reinforcing element 107 from the mid-plane 150, the distance D^{B}_{AE} being measured along the carcass reinforcement 70, is greater than 5 mm (D^{B}_{AE} - D^{C}_{AE} > 5 mm).

In a variant, the bielastic reinforcing element is in part radially adjacent to at least one axial end of a reinforcing layer of the crown reinforcement and radially extended inwards and axially outwards in such a way as to be, in part, radially adjacent to the carcass reinforcement. The difference from the embodiment shown in Figure 7 is that the bielastic reinforcing element overlaps not all the reinforcing layers of the crown reinforcement, but only some of them.

Figure 8 shows, in radial cross section, one quarter of another tyre 18 according to another embodiment of the invention in which the reinforcing layers 31 and 32 are surmounted by a hooping layer 33, the reinforcing elements of which are oriented circumferentially. A hooping layer, also known as a bracing layer, is a layer comprising circumferentially aligned reinforcing threads (similar to hoops) which hinder the crown reinforcement from expanding when the tyre is rolling at high speed. In this configuration, the bielastic reinforcing element 107 makes it possible to limit the propagation of cracks into the region between the reinforcing layers 31 and 32 and the hooping layer 33.

## Claims

1. Tyre (11-18) comprising:
a carcass reinforcement (70) radially surmounted by a crown reinforcement (30) comprising at least one layer of reinforcements (31, 32);
a bielastic reinforcing element (101-107) extending circumferentially and comprising a bielastic fabric, **characterized by** the bielastic reinforcing element being, at least in part, radially adjacent to a portion of at least one reinforcing layer of the crown reinforcement, in the immediate proximity of an axial end of said reinforcing layer of the crown reinforcement.

2. Tyre according to Claim 1, in which the bielastic fabric is a bielastic knitted fabric, the loops forming the stitches of which are capable of moving with respect to one another in the knitting direction and in the direction perpendicular to the knitting.

3. Tyre according to one of Claims 1 or 2, in which the bielastic reinforcing element is placed, at least in part, radially between the crown reinforcement (30) and the carcass reinforcement (70).

4. Tyre according to one of Claims 1 to 3, in which the crown reinforcement comprises at least two reinforcing layers (31, 32), including reinforcing elements which are mutually parallel in each of said reinforcing layers and are crossed from one of said layers to another, and in which the bielastic reinforcing element is placed, at least in part, radially between two of said reinforcing layers of the crown reinforcement.

5. Tyre according to one of Claims 1 to 4, in which the bielastic reinforcing element is extended so as to border an axial end of at least one reinforcing layer of the crown reinforcement.

6. The tyre according to Claim 5, in which the bielastic reinforcing element borders an axial end of at least the radially outermost reinforcing layer of the crown reinforcement and, at least in part, covers the radially outer surface of this reinforcing layer.

7. Tyre according to Claim 6, in which the radially outer surface of the radially outermost reinforcing layer of the crown reinforcement is entirely covered by the bielastic reinforcing element.

8. Tyre according to one of Claims 1 to 3 or 5 to 7, in which the bielastic reinforcing element borders the axial end of the crown reinforcement.

9. Tyre according to one of Claims 1 or 2, in which the bielastic reinforcing element is in part radially adjacent to at least one axial end of a reinforcing layer of the crown reinforcement and extended, radially inwards and axially outwards, so as to be, in part, radially adjacent to the carcass reinforcement.

10. Tyre according to one of Claims 1 or 2, in which the crown reinforcement comprises at least two reinforcing layers, the radially outer reinforcing layer having an axial width smaller than the width of the radially inner reinforcing layer, and in which the bielastic reinforcing element is in part radially adjacent to an axial end of each of the reinforcing layers of the crown reinforcement and extended, radially inwards and axially outwards, so as to be, in part, radially adjacent to the carcass reinforcement.

## Patentansprüche

1. Reifen (11 bis 18), der Folgendes umfasst:
eine Karkassenverstärkung (70), die radial durch eine Kranzverstärkung (30), die wenigstens eine Verstärkungslage (31, 32) umfasst, überbaut ist;
ein bielastisches Verstärkungselement (101 bis 107), das sich in Umfangsrichtung erstreckt und ein bielastisches Gewebe umfasst, **dadurch gekennzeichnet, dass** das bielastische Verstärkungselement sich wenigstens teilweise radial angrenzend an einen Abschnitt der wenigstens einen Verstärkungslage der Kranzverstärkung in unmittelbarer Nähe zu einem axialen Ende der Verstärkungslage der Kranzverstärkung befindet.

2. Reifen nach Anspruch 1, wobei das bielastische Gewebe eine bielastische Wirkware ist, wobei die Schleifen die Maschen bilden, die sich in der Wirkrichtung und in der Richtung senkrecht zur Wirkrichtung relativ zueinander bewegen können.

3. Reifen nach Anspruch 1 oder 2, wobei das bielastische Verstärkungselement wenigstens teilweise radial zwischen der Kranzverstärkung (30) und der Karkassenverstärkung (70) angeordnet ist.

4. Reifen nach einem der Ansprüche 1 bis 3, wobei die Kranzverstärkung wenigstens zwei Verstärkungslagen (31, 32) umfasst, die Verstärkungselemente enthalten, die in jeder der Verstärkungslagen zueinander parallel verlaufen und von einer der Lagen gekreuzt werden, und wobei das bielastische Verstärkungselement wenigstens teilweise radial zwischen zwei der Verstärkungslagen der Kranzverstärkung angeordnet ist.

5. Reifen nach einem der Ansprüche 1 bis 4, wobei das bielastische Verstärkungselement so verlängert ist, dass es an ein axiales Ende der wenigstens einen Verstärkungslage der Kranzverstärkung angrenzt.

6. Reifen nach Anspruch 5, wobei das bielastische Verstärkungselement an ein axiales Ende wenigstens der radial äußersten Verstärkungslage der Kranzverstärkung angrenzt und wenigstens teilweise die radial äußere Oberfläche dieser Verstärkungslage bedeckt.

7. Reifen nach Anspruch 6, wobei die radial äußere Oberfläche der radial äußersten Verstärkungslage der Kranzverstärkung durch das bielastische Verstärkungselement vollständig bedeckt ist.

8. Reifen nach einem der Ansprüche 1 bis 3 oder 5 bis 7, wobei das bielastische Verstärkungselement an das axiale Ende der Kranzverstärkung angrenzt.

9. Reifen nach einem der Ansprüche 1 oder 2, wobei sich das bielastische Verstärkungselement teilweise radial angrenzend zu wenigstens einem axialen Ende einer Verstärkungslage der Kranzverstärkung befindet und sich radial einwärts und radial auswärts erstreckt, so dass es teilweise radial angrenzend zu der Karkassenverstärkung ist.

10. Reifen nach einem der Ansprüche 1 oder 2, wobei die Kranzverstärkung wenigstens zwei Verstärkungslagen umfasst, wobei die radial äußere Verstärkungslage eine axiale Breite aufweist, die kleiner ist als die Breite der radial inneren Verstärkungslage, und wobei sich das bielastische Verstärkungselement wenigstens teilweise radial angrenzend an ein axiales Ende jeder der Verstärkungslagen der Kranzverstärkung befindet und sich radial einwärts und axial auswärts erstreckt, so dass es teilweise radial angrenzend zu der Karkassenverstärkung ist.

## Revendications

1. Pneumatique (11-18) comprenant une armature de carcasse (70), radialement surmontée d'une armature de sommet (30) comportant au moins une couche de renforts (31, 32), le pneumatique comprenant en outre un élément de renfort biélastique (101-107) s'étendant circonférentiellement et constitué d'un tissu biélastique, **caractérisé en ce que** l'élément de renfort biélastique est, au moins en partie, radialement adjacent à une portion d'au moins une couche de renforts de l'armature de sommet, à proximité immédiate d'une extrémité axiale de cette couche de renforts de l'armature de sommet.

2. Pneumatique selon la revendication 1, dans lequel le tissu biélastique est un tissu à mailles dont les boucles formant les mailles sont susceptibles de se déplacer les unes par rapport aux autres dans le sens du tricotage et dans le sens perpendiculaire au tricotage.

3. Pneumatique selon l'une des revendications 1 ou 2, dans lequel l'élément de renfort biélastique est placé, au moins en partie, radialement entre l'armature de sommet (30) et l'armature de carcasse (70).

4. Pneumatique selon l'une des revendications 1 à 3, dans lequel l'armature de sommet comprend au moins deux couches de renforts (31, 32) les renforts étant sensiblement parallèles entre eux dans chaque couche et croisés d'une couche à l'autre, et dans lequel l'élément de renfort biélastique est placé, au moins en partie, radialement entre deux couches de renforts de l'armature de sommet.

5. Pneumatique selon l'une des revendications 1 à 4, dans lequel l'élément de renfort biélastique est prolongé de manière à border une extrémité axiale d'au moins une couche de renforts de l'armature de sommet.

6. Pneumatique selon la revendication 5, dans lequel l'élément de renfort biélastique borde une extrémité axiale d'au moins la couche de renfort radialement la plus à l'extérieur de l'armature de sommet et couvre au moins partiellement la surface radialement extérieure de cette couche de renfort.

7. Pneumatique selon la revendication 6, dans lequel la surface radialement extérieure de la couche de renfort radialement le plus à l'extérieur de l'armature de sommet est entièrement recouverte de l'élément de renfort biélastique.

8. Pneumatique selon l'une des revendication 1 à 3 ou 5 à 7, dans lequel l'élément de renfort biélastique borde l'extrémité axiale de l'armature de sommet.

9. Pneumatique selon l'une des revendications 1 ou 2, dans lequel l'élément de renfort biélastique est en partie radialement adjacent à au moins une extrémité axiale d'une couche de renforts de l'armature de sommet et prolongé radialement vers l'intérieur et axialement vers l'extérieur de sorte à être en partie radialement adjacent à l'armature de carcasse.

10. Pneumatique selon l'une des revendications 1 ou 2, dans lequel l'armature de sommet comprend au moins deux couches de renforts, la couche de renforts radialement extérieure ayant une largeur axiale inférieure à la largeur de la couche de renforts radialement intérieure, et dans lequel l'élément de renfort biélastique est en partie radialement adjacent à une extrémité axiale de chacune des couches de renforts de l'armature de sommet et prolongé radialement vers l'intérieur et axialement vers l'extérieur de sorte à être en partie radialement adjacent à l'armature de carcasse.
